# FASCICULE DE BREVET EUROPEEN

(11) **EP 0 519 814 B1**
(45) Date de publication et mention de la délivrance du brevet: **26.02.1997**
(21) Numéro de dépôt: 92401684.3
(22) Date de dépôt: 17.06.1992
(51) Int. Cl.: H04L 12/56

(54) **Dispositif de mesure de débit de circuits virtuels empruntant une voie de communication à multiplexage temporel asynchrone**
Vorrichtung zur Messung der Datenrate virtueller Verbindungen eines asynchronen Zeitvielfachübertragungsweges
Apparatus for measuring the data rate of virtual channels on an asynchronous time division multiplex communication link

(30) Priorité: 18.06.1991 FR 9107430
(43) Date de publication de la demande: 23.12.1992
(73) Titulaire: ALCATEL N.V., NL-1077 XX Amsterdam (NL); ALCATEL CIT, 75008 Paris (FR)
(72) Inventeur: Vinel, Paul, F-78140 Velizy (FR); Dieudonne, Marc, F-91430 Igny (FR)
(74) Mandataire: Pothet, Jean Rémy Emile Ludovic

(56) Documents cités:
- EP-A- 0 383 660
- EP-A- 0 403 996

## Description

Le domaine de l'invention est celui des dispositifs de mesure de débit de circuits virtuels empruntant une voie de transmission à multiplexage temporel asynchrone.

De façon connue, une voie de transmission à multiplexage temporel asynchrone est une voie de transmission acheminant des messages de données dans des structures de données numériques appelées cellules. Chaque cellule comprend un en-tête constitué, par exemple, de cinq caractères à huit bits et un corps de message constitué d'un nombre défini de caractères, 48 par exemple. Sur la voie de transmission, de telles cellules se suivent sans interruption.

L'en-tête de chaque cellule de message contient, sur deux caractères par exemple, une information définissant, à l'intention de l'extrémité de réception, la destination vers laquelle le corps de message devra être retransmis. Les autres caractères de l'en-tête contiennent des informations de service. La même information de destination se retrouve dans des cellules irrégulièrement espacées, appartenant à une même communication.

L'information de destination identifie ainsi une sorte de circuit virtuel attribué à cette communication, qui occupe une partie de la capacité de transmission de la voie de transmission. Plus généralement, ce circuit virtuel va occuper la voie de transmission en lui apportant un certain débit, mesuré par exemple en cellules par unité de temps, et ce débit est fluctuant, par rapport à un débit nominal attribué au circuit virtuel, à cause des caractéristiques de la source de messages et/ou à cause de celles des équipements de transmission antérieurement traversés. Il est donc nécessaire de mesurer ce débit fluctuant.

La voie de transmission supporte à tout instant plusieurs circuits virtuels dont les cellules s'intercalent de manière irrégulière dans ce qu'il est convenu d'appeler un multiplexage temporel asynchrone. Les débits nominaux des différents circuits virtuels sont différents. Chacun d'eux fluctue et la somme de ces débits fluctuants est limitée par le débit maximal de la voie de transmission.

Par ailleurs, le nombre de circuits virtuels qui peuvent être séparément identifiés est très élevé et atteint par exemple 64 K. Un nombre réduit d'entre eux seulement sont actifs au même moment.

La voie de transmission fournit les cellules qu'elle achemine à des équipements de commutation et de transmission situés en aval. Ces équipements reçoivent aussi des cellules d'autres voies de transmission. Pour ne pas risquer d'engorgement dans ces équipements, il convient de vérifier qu'aucun circuit virtuel, par fraude ou par défaillance, ne fournit durablement un débit supérieur au débit nominal qui lui est attribué. Au cas où cela se produit, en effet, il est admis de prendre des dispositions répressives visant à empêcher l'acheminement par la voie de transmission de toute cellule considérée comme excédentaire par rapport au débit nominal du circuit virtuel.

Un procédé connu d'évaluation du débit de circuits virtuels permettant de mesurer le débit de circuits virtuels et de limiter ce débit à une valeur maximale est basé sur l'emploi d'une mémoire dans laquelle, à chaque circuit virtuel est affecté un emplacement contenant un ensemble de données, appelé contexte, définissant les conditions de l'évaluation du débit de ce circuit virtuel et contenant des informations résultant d'étapes antérieures de cette évaluation. Ce procédé utilise aussi une horloge aménagée pour fournir une heure courante, exprimée dans une unité associée à ce circuit virtuel. A la réception de chaque cellule, le contexte du circuit virtuel auquel appartient cette cellule est lu. Ce contexte contient une heure de début qui était l'heure courante observée et enregistrée à l'occasion de la réception d'une cellule antérieure du circuit virtuel considéré. Cette heure de début est retranchée de l'heure courante actuelle et la différence de temps ainsi établie, avec le nombre de cellules observées entre celle qui a donné lieu à l'enregistrement de l'heure de début et la cellule présente est la base de l'évaluation du débit : on peut en effet en déduire soit le nombre de cellules dans un intervalle de temps donné, en attendant que la différence de temps ait atteint cet intervalle de temps donné, soit le temps nécessaire pour recevoir un nombre donné de cellules, en attendant que ce nombre de cellules ait été atteint.

Dans les deux cas, la donnée de base de l'évaluation de débit est une différence de temps établie entre une heure courante, qui est une indication numérique fournie par une horloge, et une heure de début, qui est une indication numérique semblable, fournie par l'horloge auparavant et alors enregistrée dans le contexte. Cette différence de temps est établie à l'arrivée d'une cellule.

Cependant, dans le cas où l'indication fournie par l'horloge est limitée en nombre de bits, ce qui est particulièrement intéressant car cela permet de limiter le volume du contexte de chaque circuit virtuel, il peut se produire que, en cas d'interruption prolongée de la transmission de cellules d'un circuit virtuel considéré, l'horloge fasse, pour ce circuit virtuel, un ou plusieurs cycles complets avant qu'arrive une nouvelle cellule de ce circuit virtuel. La différence de temps alors établie n'est plus significative de l'écart entre la nouvelle cellule et la cellule précédente ayant donné lieu à l'enregistrement de l'heure de début. C'est pourquoi, il est de plus prévu de procéder à une exploration cyclique des contextes et, au cours de cette exploration cyclique, procéder, dans chaque contexte, à l'incrémentation d'un compteur de cycles d'exploration ayant une position initiale, ainsi que des moyens additionnels pour, lors de l'arrivée d'une cellule, lire ce compteur de cycles d'exploration, noter sa position relative, par rapport à sa position initiale, ainsi que, lorsque la position relative notée correspond à un nombre donné de cycles d'exploration, ce nombre étant supérieur à un, inhiber toute action répressive contre les cellules reçues.

Cette solution est décrite dans la demande de brevet française n° 90.09.441.

A chaque arrivée de cellules, le compteur d'exploration du circuit virtuel correspondant est remis à sa position initiale, par exemple à zéro.

On évite ainsi une suppression ou un marquage injustifiés de cellules arrivant après ce qu'il est convenu d'appeler un long silence, c'est à dire après une ou plusieurs révolutions de l'horloge d'exploration cyclique.

Cependant, ce dispositif ne permet pas de détecter une absence anormale de cellules d'un circuit virtuel donné. Une absence de cellules pendant un certain temps signifie notamment une coupure de communication lorsque le circuit virtuel est du type garantissant un débit minimal. Ce type de communication est par exemple celui des liaisons téléphoniques où les périodes de silence des correspondants sont codées et s'accompagnent d'une transmission de cellules ayant des corps de cellules de valeur nulle. Ces cellules maintiennent de ce fait un certain débit sur le canal de transmission. Dans ce type de communications, un long silence est significatif d'une coupure du canal de transmission.

De plus, les dispositifs connus ne peuvent pas faire la distinction entre une voie de transmission assurant un débit minimal et une voie de transmission où une absence de cellules pendant une certaine période de temps ne signifie pas un défaut de la voie de transmission. Il n'est donc pas possible d'utiliser le compteur d'exploration précédemment défini pour compter une période de temps d'absence de cellules reçues.

La présente invention a notamment pour objectif de pallier ces inconvénients.

Plus précisément, un des objectifs de l'invention est de fournir un dispositif permettant de détecter une absence anormale de cellules dans une communication à multiplexage temporel asynchrone ayant un débit minimal garanti.

Cet objectif, ainsi que d'autres qui apparaîtront par la suite, sont atteints grâce à un dispositif d'évaluation du débit de circuits virtuels acheminant des cellules et empruntant une voie de transmission à multiplexage temporel asynchrone du type comprenant une mémoire dans laquelle, à chaque circuit virtuel est affecté un contexte contenant un ensemble de données définissant les conditions de l'évaluation du débit de ce circuit virtuel et contenant des informations résultant d'étapes antérieures de cette évaluation, une horloge aménagée pour fournir une heure courante et des moyens de traitement tels que, à la réception de chaque cellule, le contexte du circuit virtuel auquel appartient cette cellule est lu, ce contexte contenant une heure de début qui était l'heure courante observée et enregistrée à l'occasion de la réception d'une cellule antérieure du circuit virtuel considéré, cette heure de début étant retranchée de l'heure courante actuelle et la différence de temps ainsi établie, avec le nombre de cellules observées entre celle qui a donné lieu à l'enregistrement de l'heure de début et la cellule présente servant de base de l'évaluation du débit, ledit dispositif comprenant des moyens pour procéder à une exploration cyclique desdits contextes et, au cours de cette exploration cyclique, procéder, pour chaque contexte, à l'incrémentation du contenu d'un compteur de cycles d'exploration ayant une position initiale, ledit dispositif comprenant des moyens d'identification des circuits virtuels garantissant un débit minimal et des moyens de traitement comparant pour chaque circuit virtuel identifié le contenu du compteur de cycles d'exploration correspondant au circuit virtuel identifié avec une valeur de seuil prédéterminée pour fournir un signal de détection de coupure de communication lorsque le contenu dudit compteur atteint ladite valeur de seuil prédéterminée.

Avantageusement, lesdits moyens d'identification et ladite valeur de seuil sont activés par des moyens de programmation desdits contextes coopérant avec des moyens de lecture d'une information de nature de communication véhiculée sur ladite voie de transmission au début de l'établissement de ladite communication par un émetteur de cellules d'un circuit virtuel garantissant un débit de cellules minimal.

Selon un mode de réalisation préférentiel, ladite valeur de seuil prédéterminée est fonction de l'intervalle de temps maximal séparant deux cellules dudit circuit virtuel garantissant un débit de cellules minimal.

Avantageusement, ladite valeur de seuil prédéterminée est enregistrée dans ledit contexte.

D'autres caractéristiques et avantages de l'invention apparaîtront à la lecture de la description suivante d'un mode de réalisation préférentiel de l'invention, donné à titre illustratif et non limitatif, et des dessins annexés dans lesquels:
- la figure 1 est un bloc diagramme d'un mode de réalisation du dispositif de l'invention appliqué à un dispositif connu ;
- la figure 2 représente un mode de réalisation des moyens de traitement selon l'invention ;
- la figure 3 est un chronogramme expliquant le principe de l'invention.

La description suivante est basée sur celle du dispositif d'évaluation de débit de circuits virtuels empruntant une voie de transmission à multiplexage temporel asynchrone de la demande de brevet FR-90.09.441 que l'on reprendra ici suffisamment pour que l'homme du métier comprenne aisément comment intervient la présente invention. Bien entendu, cette relation avec le dispositif existant n'est pas obligatoire et la présente invention est combinable avec d'autres dispositifs du même type.

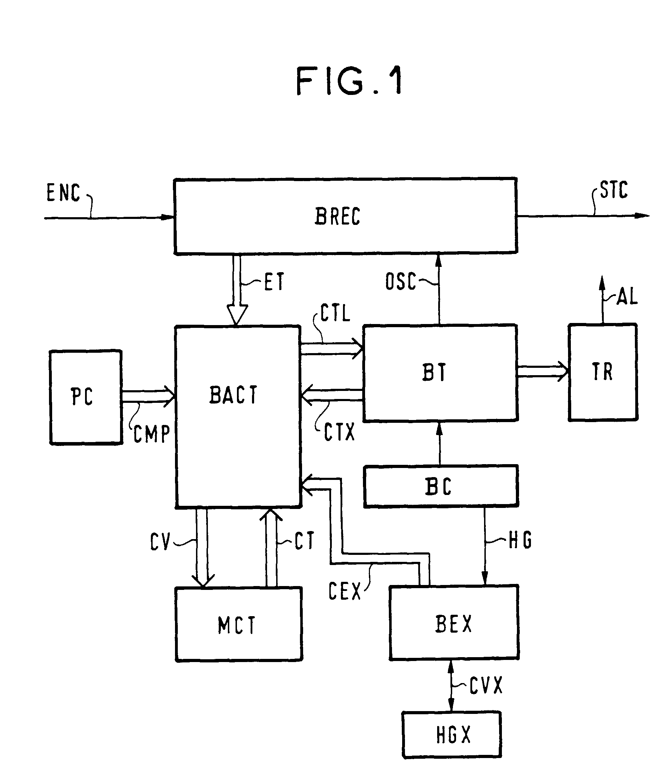

La figure 1 est un bloc diagramme d'un mode de réalisation du dispositif de l'invention coopérant avec le dispositif existant précédemment décrit.

Un système d'évaluation de débit incorporant la présente invention est interposé entre une entrée de cellules ENC et une sortie de cellules STC. Il est ainsi intercalé sur une voie de transmission à multiplexage temporel asynchrone du type défini dans la présentation de l'état de la technique de la présente demande. Pour fixer les idées, le débit binaire de la voie de transmission, reçu sur l'entrée ENC, est très important et de l'ordre de 600 Mbit/s. Ce débit traverse un bloc de réception-émission de cellules BREC que l'on peut voir comme un simple registre à décalage. Tant que les débits des circuits virtuels supportés par la liaison sont acceptables, toute cellule reçue sur l'entrée ENC est purement et simplement retransmise sur la sortie STC, avec un retard égal, par exemple, à la durée de transmission d'une celule, soit 0,5 µs environ.

Dès que l'en-tête d'une cellule est disponible dans le bloc BREC, cet en-tête ET est fourni à un bloc d'accès au contexte de circuit virtuel BACT. Dans ce bloc BACT, le numéro de circuit virtuel CV, sert d'adresse pour la lecture, dans une mémoire de contextes MCT, du contexte CT du circuit virtuel auquel appartient la cellule reçue. Ce contexte CT est un ensemble d'informations numériques, les unes semi-permanentes, c'est-à-dire fixées pour la durée d'une communication empruntant le circuit virtuel, les autres modifiables, c'est-à-dire susceptibles d'évoluer à la réception de chaque cellule du circuit virtuel. Ce contexte contient ainsi une information définissant le "passé" du circuit virtuel. Le bloc d'accès BACT fournit le contexte lu, alors appelé CTL, au bloc de traitement BT, lequel dispose par ailleurs d'une information chronométrique fournie par un bloc de compteur BC. A partir de ces deux informations, le bloc de traitement BT élabore un contexte mis à jour CTX qui est retourné au bloc d'accès BACT, pour être réinscrit à la même adresse CV, et il fournit un signal OSC, dans le cas où l'évaluation de débit accomplie au sujet de la cellule reçue manifeste la nécessité d'une action répressive, au sens précédemment exposé.

Le contexte mis à jour CTX contient des informations modifiables qui ont éventuellement changé, selon le programme de traitement du bloc BT, en fonction du fait même de la réception d'une cellule et, surtout, de l'heure d'arrivée de cette cellule, indiquée par le bloc de compteur BC.

Le signal OSC est transmis au bloc BREC où, dans une forme de mise en oeuvre, il aura pour effet de remplacer la cellule reçue par une cellule vide. Dans une autre forme de mise en oeuvre, le signal OSC provoque seulement le marquage d'un indicateur prévu dans l'en-tête de la cellule ; il signifiera, dans les organes de commutation que traversera ultérieurement la cellule, que celle-ci peut ne pas être retransmise en cas de surcharge.

Le temps mis par les blocs BACT et BT pour accomplir les opérations que l'on vient de décrire est avantageusement inférieur ou égal à la durée de transmission d'une cellule, de sorte que ces blocs sont ensuite disponibles pour un nouveau cycle de fonctionnement, dès la réception de la cellule suivante.

Les informations de contexte CT sont initialement inscrites dans la mémoire MCT par un processeur PC de commande communicant avec le bloc d'accès BACT par une liaison de commande CMP. A chaque fois, le processeur de commande fournit une adresse de circuit virtuel CV et une information de contexte CT.

Le bloc BACT contient également des dispositifs de contrôle de fonctionnement et le processeur PC, par la liaison CMP, viendra y lire des comptes-rendus de fonctionnement.

Un bloc d'exploration cyclique BEX, recevant des numéros de circuits virtuels à explorer CVX qui lui sont fournis par une horloge d'exploration HGX, s'adresse au bloc d'accès BACT par la liaison de commande d'exploration CEX, pour chaque numéro CVX, en fournissant ce numéro CVX au bloc d'accès BACT, lequel adresse la mémoire de contexte MCT, en modifie le contenu à l'aide du bloc de traitement BT, puis réinscrit le contexte CT ainsi modifié. Une telle opération peut être accomplie une ou plusieurs fois, c'est-à-dire pour un ou plusieurs contextes de circuits virtuels, dans des intervalles de temps qui lui sont réservés à l'intérieur du temps de transmission d'une cellule. La fonction d'exploration est ainsi entrelacée avec le traitement normal d'évaluation relatif aux cellules transitant par le dispositif d'évaluation. L'horloge HGX est agencée pour fournir successivement les numéros de tous les circuits virtuels, qu'ils soient actifs ou non.

Le bloc de compteur BC peut être un simple compteur binaire avançant d'un pas à chaque période d'une horloge incorporée et passant ainsi cycliquement par toutes ses positions. Le bloc d'exploration BEX reçoit des impulsions d'horloge HG du bloc de compteur BC et commande en conséquence la progression de l'horloge d'exploration HGX et une opération d'exploration d'un contexte au bloc d'accès BACT.

Le bloc de traitement BT comprend un module de circuits d'exploration qui reçoit du bloc d'accès BACT, dès la lecture d'un contexte de circuit virtuel CT par le bloc BACT, le contenu d'une zone d'enregistrement du contexte CT servant de compteur d'exploration. Si la lecture du contexte CT a lieu dans le cadre de la fonction d'exploration et commandée par le bloc d'exploration BEX , le bloc BACT fournit également un signal de commande d'incrémentation. En échange, le module de circuits d'exploration fournit au bloc d'accès BACT une nouvelle valeur correspondant à l'ancienne valeur augmentée d'une unité, pour enregistrement dans ladite zone d'enregistrement du contexte CT. Dans la mesure où l'exploration commandée par le bloc BEX est cyclique et concerne tous les contextes de tous les circuits virtuels, chaque compteur d'exploration avance d'un pas à chaque cycle d'exploration.

Par ailleurs, le compteur d'exploration d'un contexte est réinitialisé après la réception de chaque cellule correspondant à ce contexte.

A ces dispositions, la présente invention ajoute des moyens de traitement TR d'informations qui reçoivent, selon un premier mode de réalisation:
- le contenu SU d'une zone d'enregistrement du contexte mémorisé dans la mémoire de contexte MCT, ce contexte correspondant à l'adresse pointée par l'horloge d'exploration HGX;
- une valeur de seuil S fixe comprise dans des moyens de mémorisation annexes ou également dans une zone d'enregistrement du contexte;
- le contenu LS du compteur d'exploration de ce contexte.

Ces données sont par exemple fournies aux moyens de traitement TR par le bloc de traitement BT recevant le contexte lu CTL. Bien entendu, lorsque l'invention est appliquée à d'autres dispositifs de ce type, les données peuvent provenir d'autres origines, par exemple être lues directement dans la mémoire de contexte MCT.

L'information SU indique la nature de la communication constituée par les cellules dont le contexte est adressé par l'horloge d'exploration HGX. Selon l'invention, l'information SU indique si cette communication garantit ou non un débit minimal de cellules. Cette information est chargée au début d'une communication par le processeur PC de commande à l'aide de la liaison de commande CMP. Selon un mode de réalisation préférentiel, l'information SU est constituée d'un bit unique dont l'état actif indique que les cellules correspondant au contexte pointé appartiennent à une communication à débit minimal garanti. Le processeur PC de commande reçoit au début d'une communication, par exemple immédiatement après le décrochage d'un combiné téléphonique par un abonné, une information du poste téléphonique lui indiquant que cette communication garantit un débit minimal. Il y a donc identification de l'émetteur des cellules du circuit virtuel. La lecture du bit SU du contexte est par exemple effectuée à l'aide d'un masque ou de décalages successifs du contexte dans le bloc de traitement BT.

Le contenu LS du compteur d'exploration correspondant au contexte pointé contient le nombre de cycles d'exploration effectués par l'horloge d'exploration HGX depuis la réception de la dernière cellule correspondant à ce contexte, puisque chaque réception de cellule d'une communication donnée remet à sa valeur initiale, notamment à zéro, le contenu du compteur d'exploration correspondant.

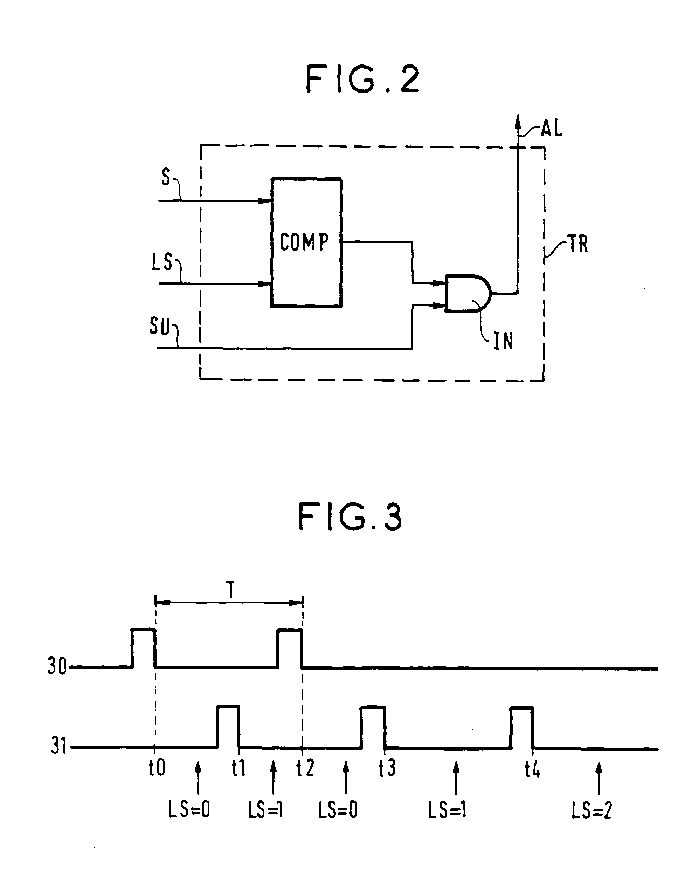

Les moyens de traitement TR d'informations comprennent avantageusement, comme représenté en figure 2, un comparateur COMP qui compare la valeur du seuil S avec le contenu LS du compteur d'exploration. Si LS est supérieur à la valeur du seuil S, le comparateur COMP en déduit qu'il y a absence anormale de cellules sur la voie de communication considérée. Cette absence peut cependant être normale si le circuit virtuel ne garantit pas un débit minimal, c'est à dire qu'il peut y avoir une longue absence de cellules de ce circuit virtuel sans que l'on soit pour autant en présence d'une anomalie. C'est pourquoi, les moyens de traitement TR d'informations comprennent également des moyens d'inhibition IN de la valeur logique fournie par le comparateur COMP, ces moyens d'inhibition IN étant constitués par exemple par une porte logique ET dont une des entrées est raccordée à la sortie du comparateur COMP et l'autre entrée à des moyens fournissant le bit SU indicateur de la nature de la communication. Selon ce mode de réalisation, si SU est à 1, la communication est du type à garantir un débit minimal et si SU est à 0, la communication ne donne pas lieu à surveillance puisqu'une longue absence de cellules sur la voie de communication peut être normale. Si le comparateur COMP indique que la valeur du seuil S a été dépassée par le contenu LS du registre d'exploration et si SU est actif, la sortie des moyens de traitement TR fournit un signal d'alarme AL indiquant qu'il n'y a pas eu de réception de cellules d'une communication à débit minimal garanti depuis un temps important et qu'il y a donc eu coupure de communication.

Ce signal d'alarme AL peut par exemple être appliqué au processeur PC de commande qui fournit alors le numéro du circuit virtuel correspondant à cette communication coupée pour permettre de localiser la voie défaillante. Il peut également y avoir réaiguillage automatique de la communication à l'aide de commutateurs de cellules situés en amont du dispositif de mesure de débit.

La valeur du seuil S est choisie de telle sorte que pour une communication donnée, il ne puisse y avoir de génération de signal d'alarme si le débit minimal est respecté. La valeur du seuil S est propre à chaque circuit virtuel et transmise au processeur PC de commande en même temps que l'indication SU. Avantageusement, la fréquence de scrutation des différents contextes et donc des compteurs d'exploration est telle qu'il est effectué une scrutation de chaque contexte dans un intervalle de temps correspondant à l'écart maximal entre deux cellules. Ce principe est représenté figure 3.

La figure 3 est un chronogramme montrant l'arrivée de cellules correspondant à un circuit virtuel garantissant un débit minimal de cellules et les périodes de scrutation cyclique du contexte de ce circuit virtuel.

Les impulsions de la séquence 30 correspondent chacune à la réception d'une cellule d'un circuit virtuel donné garantissant un débit minimal. Le bit SU du contexte de ce circuit virtuel aura donc été précédemment activé pour permettre la signalisation d'une coupure de communication.

Les impulsions de la séquence 31 correspondent à la scrutation cyclique du compteur de ce circuit virtuel.

L'arrivée d'une cellule à un temps t0 provoque la remise à zéro du compteur LS de ce circuit virtuel. Au temps t1, la scrutation cyclique incrémente ce compteur de 1 et le compteur LS comprend alors la valeur 1. Au temps t2, une nouvelle cellule arrive et réinitialise le compteur et au temps t3, LS est remis à 1 grâce à la scrutation cyclique. Si pendant la période de temps séparant t3 de t4 aucune nouvelle cellule n'est reçue, LS passe à 2 au temps t4. En ajustant la période de scrutation cyclique de telle sorte que l'intervalle de temps séparant deux scrutations consécutives corresponde à l'intervalle maximal T devant séparer deux cellules d'un circuit virtuel, il est possible de fixer la valeur du seuil S à 2, si bien qu'il y aura détection d'un long silence anormal pour cette voie de communication au temps t4. Il est également possible de programmer la valeur du seuil S en fonction du débit minimal de la voie de communication considérée. La fréquence de l'horloge d'exploration HGX peut alors être constante quel que soit le débit des communications.

Dans le cas où la présente invention est mise en oeuvre dans un dispositif d'évaluation de débits de circuits virtuels ayant pour objectif de limiter le débit de chacun de ces circuits virtuels à une valeur maximale allouée à chacun, le passage de LS de 0 à 1 signifie qu'il n'y a pas lieu d'effectuer de contrôle pour la prochaine cellule qui sera reçue appartenant au circuit virtuel concerné. En effet, l'incrémentation de LS signifie qu'il n'y a pas eu de réception de cellule depuis une période de temps supérieure à l'intervalle de temps minimal devant séparer deux cellules, et que le débit maximal autorisé n'est donc pas atteint.

Selon un deuxième mode de réalisation de l'invention, l'horloge d'exploration cyclique utilisée dans l'état de la technique précité pour lire les contextes afin d'inhiber une action répressive contre les cellules reçues, est complétée d'une seconde horloge d'exploration cyclique dont la fréquence peut être indépendante de la fréquence de la première horloge d'exploration cyclique. Cette seconde horloge exploite les périodes de temps où le dispositif de mesure de débit de circuits virtuels est au repos, c'est à dire où aucune cellule n'est reçue ou traitée. Cette horloge commande une exploration destinée à surveiller les circuits virtuels ayant un débit minimal garanti.

Selon une première variante, il est prévu une table comprenant les adresses des contextes des circuits virtuels assurant un débit minimal. Cette table est remise à jour à chaque début et à chaque fin de communication établie sur la voie de transmission à multiplexage temporel asynchrone, par exemple par le processeur de commande PC. A chaque pas d'horloge correspond une adresse de la table et chaque zone mémoire de la table contient une adresse de circuit virtuel distincte. A partir de l'adresse du contexte du circuit virtuel, un dispositif de lecture lit le contexte et fournit la valeur du compteur de cycles d'exploration et la valeur de seuil correspondant à ce circuit virtuel à des moyens de comparaison. Comme précédemment indiqué, ces données peuvent également être mémorisées dans d'autres moyens de mémorisation. Si la valeur du compteur de cycles d'exploration est supérieure à la valeur de seuil, le signal d'alarme est généré.

Cette variante permet de s'affranchir de l'utilisation du bit SU indiquant si le circuit virtuel garantit ou non un débit minimal. Il est cependant alors nécessaire de prévoir une table contenant les adresses des contextes des circuits virtuels assurant un débit minimal. On peut noter que cette variante revient à établir une valeur de seuil égale au rapport de fréquence entre l'horloge d'incrémentation du compteur d'exploration et l'horloge pilotant la lecture de la table d'adresses de contextes de circuits virtuels. L'avantage de cette solution est que le compteur de cycles d'exploration de chaque circuit virtuel peut ne comprendre qu'un seul bit.

Selon une autre variante, une horloge d'exploration cyclique adresse successivement toutes les positions mémoire d'une table contenant tous les bits SU de tous les circuits virtuels actifs, qu'ils appartiennent ou non à une communication à débit minimal garanti. Cette table est par exemple constituée de mots de 64 bits, chaque bit correspondant au bit SU d'un circuit virtuel. La lecture de cette table permet de détecter les bits actifs, par exemple à 1, et suivant les positions des bits actifs dans chaque mot de la table, d'adresser ensuite les contextes correspondants des circuits virtuels pour en extraire les contenus du compteur d'exploration et de valeur de seuil, lorsque ces contextes comprennent également les valeurs de seuil.

Cette variante nécessite une horloge d'exploration indépendante et des moyens de gestion d'une mémoire, mais présente l'avantage par rapport à la première variante de ne nécessiter la mémorisation que d'un seul bit au lieu d'une adresse complète.

L'invention permet donc de détecter une coupure anormale de communication établie à l'aide de circuits virtuels présentant un débit minimal garanti. Elle s'applique dès lors qu'une horloge de scrutation cyclique de contextes de circuits virtuels est utilisée dans un dispositif de mesure de débit de circuits virtuels.

## Revendications

1. Dispositif d'évaluation du débit de circuits virtuels acheminant des cellules et empruntant une voie de transmission à multiplexage temporel asynchrone du type comprenant une mémoire dans laquelle, à chaque circuit virtuel est affecté un contexte contenant un ensemble de données définissant les conditions de l'évaluation du débit de ce circuit virtuel et contenant des informations résultant d'étapes antérieures de cette évaluation, une horloge aménagée pour fournir une heure courante et des moyens de traitement tels que, à la réception de chaque cellule, le contexte du circuit virtuel auquel appartient cette cellule est lu, ce contexte contenant une heure de début qui était l'heure courante observée et enregistrée à l'occasion de la réception d'une cellule antérieure du circuit virtuel considéré, cette heure de début étant retranchée de l'heure courante actuelle et la différence de temps ainsi établie, avec le nombre de cellules observées entre celle qui a donné lieu à l'enregistrement de l'heure de début et la cellule présente servant de base de l'évaluation du débit, ledit dispositif comprenant des moyens pour procéder à une exploration cyclique desdits contextes et, au cours de cette exploration cyclique, procéder, pour chaque contexte, à l'incrémentation du contenu d'un compteur de cycles d'exploration ayant une position initiale, caractérisé en ce qu'il comporte des moyens (SU) d'identification des circuits virtuels garantissant un débit minimal et des moyens (TR) de traitement comparant pour chaque circuit virtuel identifié le contenu (LS) dudit compteur de cycles d'exploration correspondant audit circuit virtuel identifié avec une valeur (S) de seuil prédéterminée pour fournir un signal (AL) de détection de coupure de communication lorsque le contenu (LS) dudit compteur atteint ladite valeur (S) de seuil prédéterminée.

2. Dispositif selon la revendication 1 caractérisé en ce que lesdits moyens (SU) d'identification et ladite valeur de seuil (S) sont activés par des moyens de programmation desdits contextes coopérant avec des moyens de lecture d'une information de nature de communication véhiculée sur ladite voie de transmission au début de l'établissement de ladite communication par un émetteur de cellules d'un circuit virtuel garantissant un débit de cellules minimal.

3. Dispositif selon l'une quelconque des revendications 1 et 2 caractérisé en ce que ladite valeur (S) de seuil prédéterminée est fonction de l'intervalle de temps (T) maximal séparant deux cellules dudit circuit virtuel garantissant un débit de cellules minimal.

4. Dispositif selon l'une quelconque des revendications précédentes, caractérisé en ce que ladite valeur (S) de seuil prédéterminée est enregistrée dans ledit contexte.

## Patentansprüche

1. Vorrichtung zur Bewertung des Durchsatzes von virtuellen Schaltkreisen, die Zellen übertragen und einen Übertragungskanal mit asynchroner Zeitmultiplexierung verwenden, mit einem Speicher, in dem jedem virtuellen Schaltkreis ein Kontext mit einer Gruppe von die Bewertungsbedingungen des Durchsatzes dieses virtuellen Schaltkreises definierenden Daten und mit Informationen, die von früheren Bewertungsphasen stammen, zugeordnet ist, mit einer Uhr, die eine laufende Uhrzeit liefern kann, und mit solchen Verarbeitungsmitteln, daß bei Empfang jeder Zelle der Kontext des virtuellen Schaltkreises, zu dem diese Zelle gehört, gelesen wird, der den Anfangszeitpunkt enthält, der die laufende Uhrzeit beim Empfang einer früheren Zelle des betreffenden virtuellen Schaltkreises war, wobei diese Anfangszeit von der laufenden Uhrzeit abgezogen wird und die so gebildete Zeitdifferenz mit der Anzahl von Zellen, die zwischen der Zelle, welche zur Speicherung der Anfangszeit geführt hat, und der aktuellen Zelle als Basis für die Bewertung des Durchsatzes herangezogen wird, wobei die Vorrichtung Mittel aufweist, um eine zyklische Untersuchung der Kontexte durchzuführen und während dieser zyklischen Untersuchung für jeden Kontext eine Inkrementierung des Inhalts eines Untersuchungszyklenzählers vorzunehmen, der eine Ursprungsstellung hat, dadurch gekennzeichnet, daß die Vorrichtung Mittel (SU) zur Identifizierung der virtuellen Schaltkreise besitzt, die einen Mindestdurchsatz garantieren, sowie Verarbeitungsmittel (TR), die für jeden identifizierten virtuellen Schaltkreis den Inhalt (LS) des dem identifizierten virtuellen Schaltkreis entsprechenden Untersuchungszyklenzählers mit einem vorgegebenen Schwellwert (S) vergleichen, um ein Signal (AL) betreffend die Erfassung einer Unterbrechung der Nachrichtenverbindung zu liefern, wenn der Inhalt (LS) des Zählers den vorgegebenen Schwellwert (S) erreicht.

2. Vorrichtung nach Anspruch 1, dadurch gekennzeichnet, daß die Mittel (SU) zur Identifizierung und der Schwellwert (S) von Programmiermitteln für die Kontexte aktiviert werden, die mit Mitteln zum Lesen einer Information über die Art der auf dem Übertragungskanal zu Beginn des Aufbaus einer Verbindung durch einen Sender von Zellen eines einen Mindestdurchsatz an Zellen garantierenden virtuellen Schaltkreises hergestellten Nachrichtenverbindung zusammenwirken.

3. Vorrichtung nach einem beliebigen der Ansprüche 1 und 2, dadurch gekennzeichnet, daß der vorgegebene Schwellwert (S) vom maximalen Zeitintervall (T) abhängt, das zwischen zwei Zellen des einen Mindestdurchsatz an Zellen garantierenden virtuellen Schaltkreises liegt.

4. Vorrichtung nach einem beliebigen der vorhergehenden Ansprüche, dadurch gekennzeichnet, daß der vorbestimmte Schwellwert (S) im Kontext gespeichert ist.

## Claims

1. Device for evaluating the throughput of virtual circuits conveying cells and using an asynchronous time-division multiplex transmission medium, comprising a store in which each virtual circuit is assigned a context containing a set of data defining the conditions for evaluating the throughput of said virtual circuit and data obtained from previous such evaluations, a clock adapted to supply a current time and a processor unit whereby, when each cell is received, the context of the respective virtual circuit is read, said context containing a start time which was the current time observed and stored when a previous cell of the virtual circuit in question was received, said start time being subtracted from the current time and the time difference obtained in this way together with the number of cells observed between that for which the start time was recorded and the present cell providing the basis for evaluating the throughput, said device further comprising means for scanning said contexts cyclically and, during said cyclic scanning, incrementing for each context the content of a scan cycle counter having an initial position, characterised in that it includes means (SU) for identifying virtual circuits guaranteeing a minimal throughput and processor means (TR) comparing for each identified virtual circuit the content (LS) of said scan cycle counter for said identified virtual circuit with a predetermined threshold value (S) to produce a cut off call detection signal (AL) if the content (LS) of said counter reaches said predetermined threshold value (S).

2. Device according to claim 1 characterised in that said identification means (SU) and said threshold value (S) are activated by context programming means cooperating with means for reading call nature data conveyed on said transmission medium at the start of setting up of said call by a cell sender of a virtual circuit guaranteeing a minimal throughput of cells.

3. Device according to claim 1 or claim 2 characterised in that said predetermined threshold value (S) depends on the maximal time interval (T) between two cells of said virtual circuit guaranteeing a minimal cell throughput.

4. Device according to any one of the preceding claims characterised in that said predetermined threshold value (S) is stored in said context.
